# EUROPÄISCHE PATENTSCHRIFT

(11) **EP 1 110 011 B1**
(45) Veröffentlichungstag und Bekanntmachung des Hinweises auf die Patenterteilung: **03.09.2003**
(21) Anmeldenummer: 00906362.9
(22) Anmeldetag: 21.02.2000
(51) Int. Cl.: F16H 1/20, F16H 57/02

(54) **MEHRSTUFIGES STIRNRADGETRIEBE**
MULTI-STAGE SPUR GEAR TRANSMISSION
REDUCTEUR A PLUSIEURS ETAGES DE PIGNONS CYLINDRIQUES

(30) Priorität: 08.07.1999 DE 19931818
(43) Veröffentlichungstag der Anmeldung: 27.06.2001
(73) Patentinhaber: Maxon-Motor GmbH, 79350 Sexau (DE)
(72) Erfinder: FÜTTERER, Bodo, CH-6005 Luzern (CH)
(74) Vertreter: Grünecker, Kinkeldey, Stockmair & Schwanhäusser Anwaltssozietät
(86) Internationale Anmeldenummer: EP0001398
(87) Internationale Veröffentlichungsnummer: WO01004512

(56) Entgegenhaltungen:
- EP-A- 0 371 690
- DE-A- 4 342 185
- FR-A- 1 448 923
- US-A- 1 521 882
- US-A- 2 831 364
- US-A- 2 908 180

## Beschreibung

Die Erfindung betrifft ein mehrstufiges Stimradgetriebe für Elektroklein- und -kleinstmotoren, mit einem Getriebegehäuse, das eine Eingangswellenöffnung aufweist, durch die zum Betrieb des Stirnradgetriebes mit dem Elektroklein- oder -kleinstmotor eine Motorwelle in das Gehäuseinnere einführbar ist, mit zumindest zwei im Getriebegehäuse gehaltenen Getriebewellen, die parallel zu einer Mittenachse des Getriebes verlaufen und mit Stimrädern unterschiedlichen Durchmessers, die auf den Getriebewellen angeordnet sind, wobei zumindest eine der Getriebewellen als Getriebeachse drehfest im Getriebegehäuse gehalten ist, und wobei zumindest zwei Stirnräder drehstarr miteinander verbunden und zu zumindest einem Doppelradsatz zusammengefaßt sind, der auf einer Getriebewelle oder -achse drehbar gelagert ist.

Elektroklein- und -kleinstmotoren sind Elektromotoren, meist Gleichstrommotoren, mit kleinen bis sehr kleinen Abmessungen, im allgemeinen mit einem Durchmesser unter 50 mm und einer Länge unter 150 mm und einer hohen Leistung pro Gewicht. Elektroklein - und -kieinstmotoren drehen oft sehr schnell und werden regelmäßig mit Drehzahlen um die 10000 U/min und mehr eingesetzt. Zur Untersetzung der hohen Drehzahlen dieser Motoren werden Stirnradgetriebe entsprechender Größe verwendet, die meist direkt an das Motorgehäuse angeflanscht werden. Die Übersetzungsverhältnisse der zu einem bestimmten Motor jeweils passenden Getriebe wird dem Kunden oft werkseitig vorgegeben. Motor und Getriebe können zusammen bestellt werden und werden auch gemeinsam, als eine Einheit bereits vormontiert, geliefert. Aus diesem Grund haben die herkömmlichen Stirnradgetriebe meist ein zylinderförmiges Gehäuse, dessen Außendurchmesser dem des zugehörigen Motors entspricht. Die Stirnseiten des Getriebes werden von Flanschen gebildet, mit denen das Getriebe am Motor oder an einem anderen Gerät befestigt werden kann.

Bei herkömmlichen Stimradgetrieben sind die Getriebewellen in den stirnseitigen Flanschen des Getriebegehäuses drehbar gelagert. Auf jeder Getriebewelle ist ein Stirnrad drehfest angebracht, das mit einem auf einer anderen Getriebewelle angeordneten Stirnrad unterschiedlichen Durchmessers kämmt. Bei den herkömmlichen Stirnradgetrieben drehen sich die Stimräder folglich jeweils einstückig mit der zugehörigen Welle. Maximal sind daher bei den herkömmlichen mehrstufigen Stimradgetrieben zwei Stirnräder unterschiedlichen Durchmessers, ein Zahnrad und ein Ritzel, auf einer Getriebewelle angeordnet. Der Abstand der Getriebewellen einer Untersetzungsstufe bestimmt sich aus dem Übersetzungsverhältnis der jeweiligen Untersetzungsstufe.

Die typischen hohen Drehzahlen von Elektroklein- und -kleinstmotoren machen in der Praxis eine hohe Untersetzung, also ein großes Verhältnis von Eingangs- zu Ausgangsdrehzahl des Getriebes, notwendig. Derartige Untersetzungsverhältnisse können bei den vorgegebenen kleinen Baumaßen nicht in einer einzigen Getriebestufe realisiert werden. Bei herkömmlichen Stimradgetrieben ist daher das Gesamtübersetzungsverhältnis auf mehrere Getriebestufen aufgeteilt, so daß mindestens zwei Getriebewellen vorgesehen sind.

Ein wesentlicher Nachteil des herkömmlichen Aufbaus von Stimradgetrieben besteht darin, daß pro Untersetzungsstufe keine optimale Raumausnutzung möglich ist. Jede zusätzliche Untersetzungsstufe macht den Einbau einer zusätzlichen Getriebewelle notwendig und bewirkt somit zwangsläufig eine Vergrößerung des Getriebes.

Ein weiterer Nachteil der herkömmlicherweise für Elektroklein- und -kleinstmotoren verwendeten Getriebe ist der relativ große Platzbedarf dieser Getriebe bei hohen Untersetzungsverhältnissen, der daher rührt, daß jede Getriebewelle nur ein drehstarr mit ihr verbundenes Zahnradpaar trägt. Daher ist für jedes Zahnradpaar eine eigene Welle vorzusehen, was letztendlich zu einer relativ großen Anzahl von Teilen bei diesen herkömmlichen Stirnradgetrieben führt. Dies verursacht bei der Herstellung und beim Zusammenbau relativ hohe Kosten.

Um diese Probleme zu vermeiden, sind aus dem Stand der Technik Stirnradgetriebe bekannt, bei denen zumindest zwei Stimräder drehstarr miteinander verbunden und zu zumindest einem Doppelradsatz zusammengefaßt sind. Der Doppelradsatz ist auf einer Getriebewelle oder -achse drehbar gelagert. Durch die drehbare Lagerung des Doppelradsatzes kann die Getriebeachse oder -welle mehr als eine Übersetzungsstufe aufnehmen. Dadurch entfällt die Notwendigkeit, für jede Untersetzungsstufe eine eigene Getriebewelle vorzusehen.

So ist in der gattungsgemäßen DE 43 42 185 A1 ein Getriebe beschrieben, das eine Reihe miteinander kämmender Doppelradsätzen aufweist. Jeweils ein Doppelradsatz sitzt auf einer einstückig vom Getriebegehäuse ausgeformten Getriebeachse. Bei dem Getriebe der DE 43 42 185 A1 ist der Versatz zwischen dem Motor und der Ausgangswelle des Getriebes recht groß.

Dieses Problem ist bei dem Getriebe der EP 371 690 A2 gelöst, das gegenüber dem Getriebe der DE 43 42 185 A1 kleiner baut. Allerdings ist auch dieses Getriebe noch recht groß und nimmt mehr Platz ein als der Motor selber. Die Getriebe der EP 371 690 A2 und die DE 43 42 185 A1 sind aufgrund ihrer Baugröße nicht für moderne Elektroklein- und -kleinstmotoren geeignet, die das kleinstmögliche Volumen mit der größtmöglichen Leistung verbinden sollen.

Das in der FR-A-1 448 923 beschriebene Getriebe weist in einem Schnitt quer zur Motorwelle in etwa die selbe Querschnittsfläche auf, wie der Elektromotor. Da die Motorwelle beim Getriebe der FR 1,448,923 selbst eine Getriebewelle mit Stirnrädern bildet, ist bei dem dort gezeigten Getriebe der Motor nur sehr umständlich vom Getriebe zu trennen. Dies macht die Verwendung dieses Getriebes für Großserien, bei denen eine Vielzahl von verschiedenen Getrieben mit unterschiedlichen Untersetzungsstufen nach Kundenwunsch erst kurz vor dem Versand am Motor angebracht werden, unrentabel. Auch das Getriebe der US 1,521,882 ist nicht vom Motor abnehmbar.

Die US 2,831,364 zeigt dagegen ein Schaltgetnebe, das in der gezeigten Ausführungsform bei der üblichen Größe von Elektroklein- und -kleinstmotoren und deren hohen Drehzahlen nicht anwendbar wäre.

Bei der Druckschrift US 2,908,180 ist ein Stirnradgetriebe gezeigt, daß auf einen Induktionsmotor geschraubt ist. Bei diesem Getriebe ist das Bauvolumen relativ groß in radialer Richtung. Auch hier ist das Getriebe größer als der zugehörige Elektromotor.

Bei all den oben genannten Getrieben hat es sich herausgestellt, daß bei den hohen Drehzahlen, wie sie im Betrieb heutiger Elektroklein- und -kleinstmotoren zusammen mit der heute erreichten Leistungsdichte auftreten, ein hoher Verschleiß auftritt.

Der Erfindung liegt daher die Aufgabe zugrunde, durch einfache konstruktive Maßnahmen die obigen Stimradgetriebe so zu verbessern, daß sie auch bei hohen Drehzahlen kaum Verschleiß aufweisen und so groß wie die entsprechenden Elektromotoren gebaut werden können.

Diese Aufgabe wird für ein mehrstufiges Stirnradgetriebe der eingangs genannten Art erfindungsgemäß durch die Merkmale des Anspruchs 1 gelöst.

Dabei werden relativ zum Getriebegehäuse feststehende Getriebewellen, die kein Drehmoment übertragen, als Getriebeachsen bezeichnet. Unter einem Doppelradsatz wird in erster Linie die Verbindung zweier Sitmräder an ihren Stirnseiten mit einem möglichst geringen Abstand bezeichnet.

Diese Lösung ist einfach und ermöglicht den Bau von kleinen Getrieben auch bei extrem hohen Untersetzungen und hohen Eingangsdrehzahlen.

Erfindungsgemäß wird das Problem des vorzeitigen Verschleißes dadurch gelöst, daß zumindest eine Getriebeachse aus einem gesinterten keramikwerkstoff gefertigt ist: solche Werkstoffe im Sinne der technischen Lehre dieser Erfindung ermöglichen die weitgehend trockene Lagerung der typischerweise schnelldrehenden Stimräder auf der Getriebewelle oder Getriebeachse, ohne daß nennenswerter Verschleiß auftritt.

Das erfindungsgemäße Stirnradgetriebe baut im Vergleich zum Stand der Technik deshalb so klein, weil erfindungsgemäß vorgesehen ist, daß die Eingangswellenöffnung koaxial zur Mittenachse des Getriebes angeordnet ist.

Dadurch wird die Antriebsleistung zentral in das Getriebe eingeleitet und die Getriebewellen und -achsen mit den Untersetzungsstufen können auf platzsparende Weise um die Eingangswellenöffnung herum angeordnet werden. Zum einen läßt sich so die Raumausnutzung optimieren, zum anderen ermöglicht diese Ausgestaltung eine direkte Befestigung des Getriebegehäuses am Elektromotor, ohne daß das Getriebegehäuse übersteht.

Unter den erfindungsgemäßen keramikwerkstoffen hat sich besonders Zirkoniumoxid aufgrund seiner Härte und besonders hohen Verschleißfestigkeit bewährt. Getriebeachsen oder -wellen aus Zirkoniumoxid weisen eine besonders hohe Lebensdauer auf.

Aufgrund der auf der Getriebeachse drehbar gelagerten Doppelradsätze kann weitgehend auf sich drehende Getriebeachsen verzichtet werden. Daher kann zumindest eine Getriebeachse drehstarr mit dem Getriebegehäuse verbunden sein. Dies führt gegenüber drehbar gelagerten Getriebewellen, die eine separate Lagerung erfordern, zu einer Kostenreduzierung, da für eine drehstarre Verbindung - beispielsweise durch Kleben, Einpressen oder Einspritzen - für die Aufnahme der Getriebeachsen im Gehäuse gröbere Toleranzen verwendet werden können. Dadurch sinkt der Fertigungsaufwand.

In einer weiteren vorteilhaften Ausgestaltung können die Getriebeachsen parallel zueinander ausgerichtet sein. Da die Getriebeachsen gewöhnlicherweise in stimseitigen Flanschen von zylinderförmigen Gehäusen gehalten sind, ist bei parallel zueinander ausgerichteten Getriebeachsen ein symmetrischer Aufbau der Flansche möglich.

Eine bevorzugte Ausgestaltung der Erfindung kann sich auch dadurch ergeben, daß zumindest zwei Doppelradsätze identisch zueinander ausgebildet sind. Diese Ausgestaltung führt zu einem einfachen Aufbau des Getriebes, da im Gegensatz zu den herkömmlichen Stirnradgetrieben das erfindungsgemäße Getriebe aus standardisierten Zahnradsätzen aufgebaut sein kann. Des weiteren kann bei dieser erfindungsgemäßen Ausgestaltung die Unter- bzw. Übersetzung des Getriebes einfach durch Hinzufügen von weiteren Doppelradsätzen verändert werden.

Bei sich diametral gegenüberliegenden Doppelräder wird nicht nur die höchste Raumausnutzung erreicht, sondern darüber hinaus eine einfache Befestigung auf einem Motor durch zwei rechtwinklig zu den Getriebeachsen angeordnete, durchgehende Schrauben ermöglicht.

Die Doppelradsätze können in einer weiteren vorteilhaften Ausgestaltung einen einstückig angeformten Zahnradabschnitt und einen einstückig angeformten Ritzelabschnitt aufweisen, wobei der Ritzelabschnitt einen kleineren Durchmesser aufweist als der Zahnradabschnitt. Derartige einstückige Doppelradsätze lassen sich mittels bekannter Herstellungsverfahren wie Sintern oder Spritzgießen aus einer Vielfalt von Werkstoffen einfach und kostengünstig herstellen.

In Kombination mit der erfindungsgemäß aus Hartwerkstoff gefertigten Getriebeachse oder -weile hat sich in einer weiteren vorteilhaften Ausgestaltung ein Doppelradsatz aus einem gehärteten Werkstoff, vorzugsweise einem Metallwerkstoff, insbesondere Sintereisen mit einem größeren offenen Porenvolumen - ähnlich einem Sinterlager - bewährt. Die Kombination aus einem gehärteten Werkstoff für ein Stirnrad und der Keramikachse führt zu einer besonders langen Lebensdauer. Dabei ist im Gegensatz zu den in Getriebebau üblichen Naben-Welle-Kombinationen erfindungsgemäß die Getriebeachse aus einem härteren Werkstoff hergestellt als das auf der Getriebeachse oder -welle drehbar gelagerte Zahnrad.

Um im Betrieb mit einem Elektroklein- und -kleinstmotor eine einfach und schnell herzustellende Verbindung zwischen dem Elektromotor und dem Stirnradgetriebe zu ermöglichen, kann weiter vorgesehen sein, daß das Getriebegehäuse im Betrieb koaxial zu einer Motorwelle das Elektroklein- und -kleinstmotors angeordnet ist.

Die vom Elektroklein- und -kleinstmotor abgegebene Leistung wird zunächst einer Eingangsstufe, also einem ersten kämmenden Paar von Stirnrädern, zugeführt. In einer weiteren vorteilhaften Ausgestaltung der Erfindung kann vorgesehen sein, daß die mit der Motorwelle im Eingriff stehende Eingangsstufe als ein auf einer Getriebeachse oder -welle sitzendes Hohlrad ausgebildet ist. Durch ein Hohlrad läßt sich bei kleiner Baugröße bereits in der ersten Stufe die größtmögliche Untersetzung erzielen, so daß bereits die Abtriebsseite der Eingangsstufe langsam dreht und damit leichter auf der Getriebeachse oder -welle zu lagern ist. Darüber hinaus ergeben sich optimale Zahneingriffsverhältnisse, die einer Schrägverzahnung ebenbürtig sind. Weiterhin kann durch den "weicheren" Zahneingriff der Geräuschpegel deutlich reduziert werden. Da in der ersten Stufe die Zahnbelastung noch niedrig ist, läßt sich das Hohlrad auch aus einem geeigneten Kunststoff herstellen.

In einer weiteren vorteilhaften Ausgestaltung kann die Ausgangswelle des mehrstufigen Stimradgetriebes durch eine am Getriebegehäuse angebrachte Ausgangswellenöffnung nach außen geführt und relativ zum Getriebegehäuse drehbar ist. Dabei kann in einer weiteren vorteilhaften Ausgestaltung vorgesehen sein, daß die Ausgangswelle zumindest abschnittsweise als Hohlwelle ausgebildet ist, in der eine Getriebeachse oder -welle zumindest abschnittsweise aufgenommen ist. Dies führt ebenfalls zu einer sehr geringen Baugröße.

Weiter kann vorteilhaft vorgesehen sein, daß eine Getriebeachse oder -welle als Ausgangswelle ausgebildet ist, die drehbar im Getriebegehäuse gelagert ist. In dieser Ausgestaltung dient eine Getriebewelle sowohl der Lagerung von drehbar auf dieser Getriebewelle gehaltenen Doppelradsätzen als auch als Ausgangswelle, wobei dann natürlich ein ausgangsstufenseitiges Zahnrad mit dieser Getriebewelle im wesentlichen drehstarr verbunden sein muß.

In einer weiteren vorteilhaften Ausgestaltung kann zwischen der Getriebewelle und dem Getriebegehäuse eine Lagerbuchse angeordnet sein, in der die Ausgangswelle im Getriebegehäuse drehbar gelagert ist. Dadurch wird eine längere Lebensdauer durch das erfindungsgemäße Stimradgetriebe erzielt. Insbesondere kann die Lagerbuchse aus einem zu Keramikachsen bzw. -wellen passenden Werkstoff hergestellt werden, so daß geringe Reibkoeffizienten und ein geringer Verschleiß zwischen der Welle und den Keramikachsen auftreten. Eine direkte Lagerung der Keramikwellen in den Flanschen dagegen hat bei bestimmten Flanschwerkstoffen einen erhöhten Verschleiß der Flansche zur Folge.

In einer weiteren vorteilhaften Ausgestaltung kann die Motorwelle des Elektromotors verzahnt sein und direkt mit der Eingangsstufe des Getriebes kämmen. Dies ergibt aufgrund des geringen Durchmessers der Motorwelle nicht nur eine hohe eingangsstufenseitige Untersetzung, sondern auch einen ruhigen Lauf, da kein Mittenversatz wie bei einem auf der Motorwelle befestigten Ritzel auftreten kann. Aufgrund des kleinen Durchmessers der Motorwelle ist die Untersetzung der Eingangsstufe von vornherein groß, so daß die Eingangsstufe leichter auf der Getriebeachse oder -welle zu lagern ist und sich höhere Getriebeeingangsdrehzahlen realisieren lassen. Durch diese Maßnahme kann die an das Getriebe abgegebene Motorleistung erhöht werden.

Im folgenden wird der Aufbau und die Funktion des erfindungsgemäßen mehrstufigen Stimradgetriebes anhand von Ausführungsbeispielen unter Zuhilfenahme der beigefügten Zeichnungen näher beschrieben.

Es zeigen:
- Fig. 1: ein erstes Ausführungsbeispiel des erfindungsgemäßen mehrstufigen Stimradgetriebes in einer Schnittansicht;
- Fig. 2: ein zweites Ausführungsbeispiel des erfindungsgemäßen mehrstufigen Stimradgetriebes in einer Schnittansicht;
- Fig. 3: ein drittes Ausführungsbeispiel des erfindungsgemäßen Stirnradgetriebes in einer Schnittansicht;
- Fig. 4: ein erfindungsgemäßes Stimradgetriebe in einer schematischen Stirnansicht entlang der Linie IV-IV der Fig. 3;
- Fig. 5: eine Abänderung eines Doppelradsatzes für ein erfindungsgemäßes Stirnradgetriebe.

Bei den nachfolgend beschriebenen Figuren sind in den unterschiedlichen Ausführungsbeispielen gleiche Bauteile mit gleichen Bezugszeichen versehen.

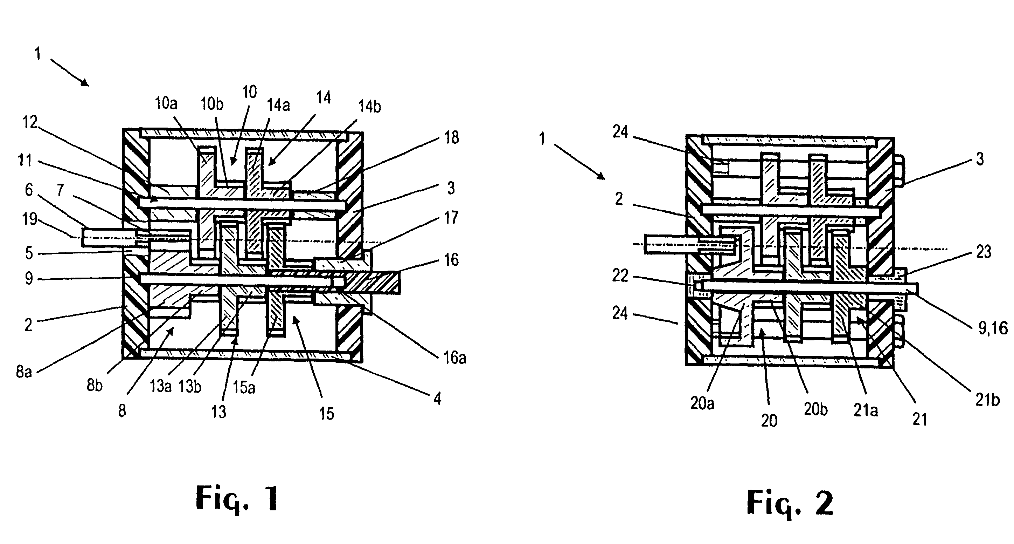

Fig. 1 zeigt ein erstes Ausführungsbeispiel des erfindungsgemäßen Stirnradgetriebes 1. Das Stimradgetriebe 1 weist ein Gehäuse auf, das aus einem motor- oder eingangsseitigem Flansch 2 und einem abtriebsseitigen Flansch 3 aufgebaut ist. Die Flansche 2, 3 sind mittels eines zylindermantelförmigen Gehäuseteils 4 miteinander verbunden. Die beiden Flansche 2, 3 sind kreisförmige Scheiben. Der motorseitige Flansch 2 weist eine Eingangswellenöffnung 5 auf, durch die eine Motorwelle 6 hindurchgeführt ist. Die Motorwelle 6 gehört zu einem in der Fig. 1 nicht dargestellten Elektromotor, dessen Stirnseite mit dem Flansch 2 lösbar, beispielsweise durch Schrauben, verbunden ist. Die Motorwelle 6 ist an ihrem Ende mit einer Stirnverzahnung 7 versehen.

Die Stimverzahnung 7 der Motorwelle kämmt mit einem Stirnrad 8 und bildet mit diesem zusammen die Eingangsstufe des Stirnradgetriebes 1. Das Stimrad 8 ist als ein Doppelradsatz ausgebildet, bei dem ein Stirnrad 8a und ein Ritzel 8b miteinander verbunden sind. Der Durchmesser (Teilungskreis) des Ritzels 8b ist kleiner als der des Zahnrades 8a. Da das Stirnradgetriebe 1 ein untersetzendes Getriebe ist, ist der Durchmesser des Stirnrades 8a größer als der Durchmesser der Motorwelle 6.

Der Doppelradsatz 8 der Eingangsstufe ist auf einer im motorseitigen Flansch 2 drehfest gehaltenen Getriebeachse 9 drehbar gelagert. Die Getriebachse 9 ist, abgesehen von durch die Reibung der Doppelradsätze verursachten Momenten, momentenfrei.

Das Ritzel 8b des Doppeiradsatzes 8 kämmt mit dem Stirnrad 10a eines weiteren Doppelradsatzes 10. Dieser Doppelradsatz 10 ist drehbar auf einer Getriebeachse 11 gelagert, die wie die Getriebeachse 9 weitgehend momentenfrei ist. Die Getriebeachse 11 ist in die Flansche 2 und 3 eingepreßt und dadurch drehstarr gehalten. Über eine Abstandshülse 12 ist der Doppelradsatz 10 derart vom antriebsseitigen Flansch 2 beabstandet, daß er mit dem Ritzel 8b des Doppelradsatzes 8 kämmt, ohne mit der Motorwelle 6 oder dem Zahnrad 8a zusammenzustoßen.

Der Doppelradsatz 10 auf der zweiten feststehenden Getriebeachse 11 bildet ebenfalls einstückig ein Zahnrad 10a sowie ein Ritzel 10b aus. Das Ritzel 10b steht mit einem Zahnrad 13a eines drehbar auf der Getriebeachse 9 gelagerten Doppelradsatzes 13 im Eingriff.

Der Doppelradsatz 13 bildet auf die gleiche Weise ein Ritzel 13b einstückig aus, das mit einem Zahnrad 14a eines weiteren Doppelradsatzes 14 kämmt. Der Doppelradsatz 14 ist auf der Getriebeachse 11 drehbar gelagert und stützt sich in axialer Richtung an dem zur Abtriebsseite weisenden Endabschnitt des Doppelradsatzes 10 ab.

Ein Ritzel 14b, das einstückig am Doppelradsatz 14 ausgebildet ist, befindet sich mit einem Zahnrad 15a eines weiteren Rades 15 im Eingriff. Das Rad 15 ist wiederum an der Getriebeachse 9 drehbar gelagert. Die Doppelradsätze 10, 13 und 14 sind identisch.

Das Abgangsrad 15 ist drehstarr mit einer Abtriebswelle 16 verbunden. Die Abtriebswelle 16 bildet zur Antriebsseite des Stimradgetriebes 1 hin einen Hohlwellenabschnitt 16a, in dem die Getriebeachse 9 drehbar aufgenommen ist. In eine Ausgangswellenöffnung (nicht bezeichnet) ist eine Lagerbuchse 17 zwischen dem abtriebsseitigen Flansch 3 und der Ausgangswelle 16 eingesetzt. Die Lagerbuchse 17 lagert die Abtriebswelle 16 drehbar im abtriebsseitigen Flansch 3. Die Lagerbuchse 17 ist aus einem Material gefertigt, dessen Reibungskoeffizient mit dem Werkstoff der Abtriebswelle 16 einen Lauf mit möglichst geringen Reibungsverlusten und einem möglichst geringen Verschleiß ermöglicht.

Zwischen dem Doppelradsatz 14 und dem abtriebsseitigen Flansch 3 ist eine Distanzhülse 18 angebracht, so daß auf der feststehenden Getriebeachse 11 der antriebsseitige Doppelradsatz 10 und der am antriebsseitigen Doppelradsatz anliegende Doppelradsatz 14 zwischen der Distanzhülse 12 (antriebsseitige Seite) und der Distanzhülse 18 axial im wesentlichen unverschieblich, aber relativ zur Getriebeachse drehbar gehalten sind. Um die Reibung an den Stirnseiten zwischen den Distanzhülsen 12, 18 und den Doppelradsätzen 10, 14 zu verringern, ist es von Vorteil, wenn die Teile 10, 12, 14, 18 in axialer Richtung ein leichtes Spiel aufweisen.

Auf der feststehenden Getriebeachse 9 weisen die einzelnen Teile 8, 13, 15, ebenfalls in axialer Richtung ein leichtes Spiel auf. Hier sind der eingangsstufenseitige Doppelradsatz 8 und der Doppelradsatz 13 sowie das Abgangsrad 15 in axialer Richtung durch den Flansch 2 und die in der Lagerbuchse 17 gehaltene Abtriebswelle 16 gehalten. Zur Verringerung der Reibung zwischen dem eingangsstufenseitigen Doppelradsatz 8 und dem Flansch 2 kann am Doppelradsatz 8 oder am Flansch 2 ein Absatz vorgesehen sein, der zwischen Doppelradsatz 8 und Flansch 2 angeordnet ist und die Kontaktfläche und damit die Reibung zwischen diesen beiden Teilen verringert. Eine ähnliche Maßnahme kann auch für die Distanzhülsen 12, 13 vorgesehen sein.

Der Kraftfluß beim Ausführungsbeispiel der Fig. 1 läuft von der Verzahnung 7 der Motorwelle 6 über das Zahnrad 8a und das Ritzel 8b zum Zahnrad 10a und dem Ritzel 10b. Vom Ritzel 10b läuft der Kraftfluß weiter zum Zahnrad 13a und dessen Ritzel 13b. Vom Ritzel 13b läuft der Kraftfluß zum Zahnrad 14a und dessen Ritzel 14b. Vom Ritzel 14b läuft der Kraftfluß weiter zum Zahnrad 15 und von dort zur Abtriebswelle 16. Da die Doppelradsätze relativ zueinander drehbar und drehbar auf der jeweiligen Getriebeachse 9, 11 gelagert sind, dreht sich jeder Doppelradsatz mit einer unterschiedlichen Geschwindigkeit. Es liegt also der Erfindung die Idee zugrunde, daß ein Doppelradsatz gleichzeitig das abtriebsseitige Zahnrad eine ersten Getriebestufe (Untersetzung oder Übersetzung) und das antriebsseitige Zahnrad einer nachfolgenden zweiten Getriebestufe bildet. Um bei Doppelradsätzen aus Metall günstige Reibungswerte und lange Laufzeiten zu erzielen, sind die beiden Getriebeachsen 9, 11 aus gesintertem Zirkoniumoxid und die Radsätze aus offenporigen, gehärteten und ölgetränkten Sintereisenteilen hergestellt.

Die Getriebeachsen 9, 11 des ersten Ausführungsbeispiels verlaufen parallel zur Motorwelle 6. Die Motorwelle 6 verläuft koaxial zur Mittenlinie 19 des Stirnradgetriebes 1.

In Fig. 1 sind die Doppelradsätze 10, 13 und 14 sowie allfällige weitere Doppelradsätze identisch.

Anhand dieses ersten Ausführungsbeispiels wird bereits deutlich, daß der Vorteil des erfindungsgemäßen Stirnradgetriebes darin liegt, daß mehrere Untersetzungsstufen auf nur zwei Getriebeachsen 9,11 angeordnet werden können. Verschiedene Gesamtuntersetzungen des Stirnradgetriebes lassen sich auf einfache Weise dadurch erreichen, daß auf den beiden Getriebeachsen 9,11 jeweils eine unterschiedliche Anzahl von Doppelradsätzen angeordnet wird. Beispielsweise wird die Gesamtuntersetzung des Ausführungsbeispiels der Fig. 1 einfach verändert, wenn ein oder mehrere Doppeiradsätze weggelassen oder hinzugefügt werden.

Aufgrund der kleinen Bauverhältnisses eines solchen Stimradgetriebes 1, das für Elektroklein- bzw. -kleinstmotoren vorgesehen ist, kann keine hydrodynamische Schmierung im Getriebe stattfinden. Die Doppelradsätze laufen daher fast trocken auf den Getriebeachsen 9, 11.

Fig. 2 zeigt ein zweites Ausführungsbeispiel des erfindungsgemäßen Stimradsatzes. Das Prinzip dieses Stimradsatzes entspricht dem Prinzip des ersten Ausführungsbeispiels. Deswegen wird im folgenden nur auf die Unterschiede zum ersten Ausführungsbeispiel näher eingegangen.

So erfolgt beim zweiten Ausführungsbeispiel der Fig. 2 der Antrieb über ein Hohlrad 20a, das Bestandteil eines eingangsstufigen Doppelradsatzes 20 ist. Der Nabenabschnitt des Hohlrades 20a ist als Distanzhülse ausgebildet. Des weiteren ist am Doppelradsatz 20, wie beim ersten Ausführungsbeispiel, ein Ritzelabschnitt 20b einstückig angeformt. Durch das Hohlrad 20a lassen sich gleich in der ersten Untersetzungsstufe noch größere Untersetzungen als bei einem Stirnrad erreichen. Der Doppelradsatz 20 dreht damit langsamer und ist leichter auf der drehbar im Getriebegehäuse gehaltenen Getriebewelle 9 zu lagern. Auch bei dieser Getriebevariante kann die Getriebewelle als stehende Achse ausgebildet sein.

Die Getriebewelle 9 gemäß dem zweiten Ausführungsbeispiel ist in den Flanschen 2 und 3 drehbar gelagert und drehstarr mit dem Zahnrad 21a, das Teil der letzten Untersetzungsstufe ist, verbunden. Einstückig mit dem Zahnrad 21a ist eine Distanzhülse 21 ausgebildet, die sich bis zum abtriebsseitigen Flansch 3 erstreckt. Alternativ kann der Hülsenabschnitt auch als separates Bauteil, das nicht mit der Getriebewelle 9 drehstarr verbunden zu sein braucht, ausgebildet sein.

Die Getriebewelle 9 ist über eine Lagerbuchse 22 drehbar im Flansch 2 und über eine Lagerbuchse 23 drehbar im Flansch 3 gehalten und erstreckt sich durch den Flansch 3 zur Außenseite des Motors. Damit bildet die Getriebewelle 9 direkt die Ausgangswelle und überträgt das Abtriebsdrehmoment.

Weiter sind in der Fig. 2 zwei Befestigungsschrauben 24 gezeigt, durch die der Flansch 2 mit dem Flansch 3 verbunden ist. Da bei dem erfindungsgemäßen Stimradgetriebe 1 insgesamt nur zwei feststehende Getriebeachsen bzw. -wellen 9, 11 vorgesehen sind, besteht, im Gegensatz zu den herkömmlichen Stimradgetrieben mit umlaufenden Wellen und einer Untersetzungsstufe pro Welle, kein Platzmangel mehr, so daß ausreichend Raum für diese durch das Innere des Stimradgetriebes 1 reichenden Schrauben vorhanden ist.

Beim zweiten Ausführungsbeispiel wird die relative Drehgeschwindigkeit zwischen der Getriebewelle 9 und der ersten Untersetzungsstufe mit dem Hohlrad 20a dadurch weiter verringert, daß sich die Getriebewelle 9 selber dreht.

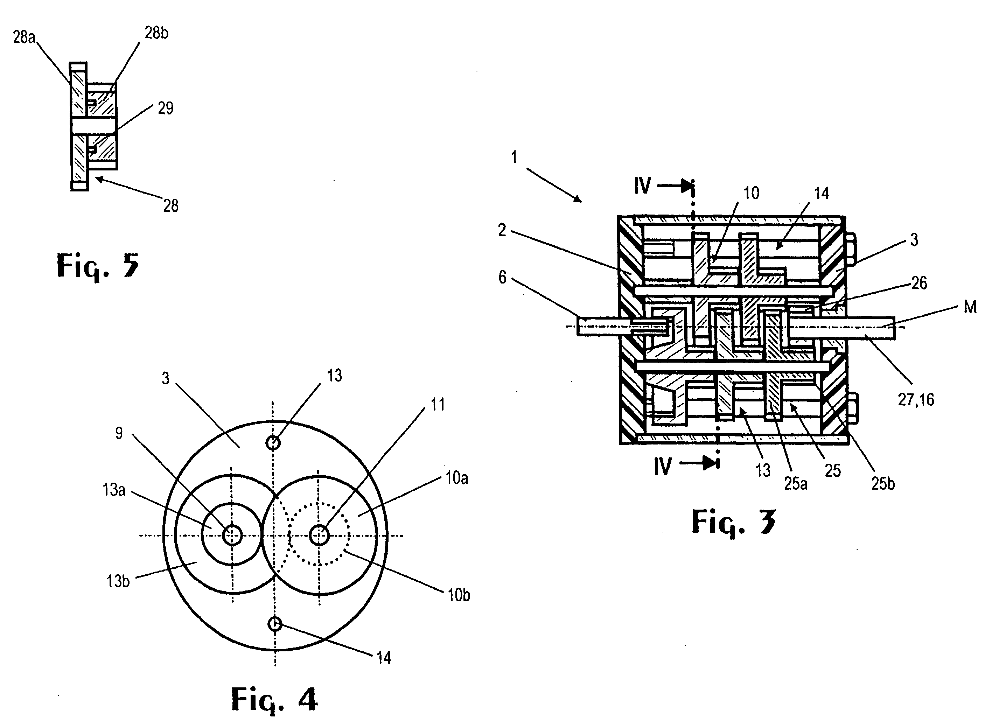

Beim ersten Ausführungsbeispiel der Fig. 1 und beim zweiten Ausführungsbeispiel der Fig. 2 sind Antrieb und Abtrieb des Stirnradgetriebes 1 nicht fluchtend. Ein Stimradgetriebe 1, bei dem Antrieb und Abtrieb fluchtend entlang der Mittenachse M des Stimradgetriebes 1 angeordnet sind, ist im dritten Ausführungsbeispiel der Fig. 3 gezeigt. Auch hier wird wiederum nur auf die Unterschiede zu den beiden voranstehend erläuterten Ausführungsbeispielen eingegangen.

Im Unterschied zum zweiten Ausführungsbeispiel ist der letzte Doppelradsatz einstückig mit einem Stirnrad 25a und einem Ritzel 25b ausgebildet. Das Ritzel 25b befindet sich mit einer Verzahnung 26 der Abtriebswelle 27 im Eingriff. Zwar ist in der Fig. 3 ein von den Doppelradsätzen 10, 13, 14, 15 unterschiedlicher Doppelradsatz gezeigt, doch kann auch hier ohne jede Einschränkung ein zu diesen Doppelradsätzen identischer Doppelradsatz 25 verwendet werden.

Bei den bislang beschriebenen Ausführungsbeispielen waren die Doppelradsätze jeweils einstückig, beispielsweise durch Druckguß, MIM-Technik oder durch ein Sinterverfahren, mit einem Zahnradabschnitt und einem Ritzelabschnitt, dessen Durchmesser (Teilungskreis) kleiner als der des Zahnrades ist, ausgebildet. Ohne Einschränkung der Funktionalität des Stimradgetriebes 1 können allerdings die Zahnräder und die Ritzel jeweils aus getrennten Bauelementen gefertigt sein.

In der Fig. 4 ist ein stirnseitiger Schnitt durch das Stirnradgetriebe der Fig. 3 entlang der Linie IV-IV mit Blickrichtung entlang der Pfeile schematisch dargestellt. Die beiden Getriebeachsen bzw. Getriebewellen 9, 11 liegen diametral versetzt zur Mittenlinie M des Stimradgetriebes 1. Dadurch ist eine optimale Raumausnutzung möglich, so daß ausreichend Platz für zwei Durchgangsschrauben 13, 14 vorhanden ist. Mit diesen Schrauben kann das Stimradgetriebe an einem Motor oder einem anderen Gerät befestigt werden.

Fig. 5 zeigt einen Doppelradsatz aus getrennten Bauelementen. Ein Doppelradsatz 28 besteht aus einem drehstarr mit einem Zahnrad 28a verbundenen Ritzel 28b. Das Zahnrad 28a weist Stifte 29 auf, die auf einem zum Zahnrad 28a koaxial verlaufenden Kreis verteilt sind. Diese Stifte greifen in entsprechende Öffnungen des Ritzels 28b. Anstelle der Stifte können natürlich andere lösbare formschlüssige, aber auch nichtlösbare stoffschlüssige Verbindungen verwendet werden. Durch die Trennung von Zahnrad 28a und Ritzel 28b können beliebige Doppelradsätze zusammengestellt werden und das Gesamtuntersetzungsverhältnis des Stimradgetriebes 1 genau an die jeweiligen Bedürfnisse angepaßt werden.

Zweckmäßigerweise wird aber die Abgangsdrehzahl des Getriebes durch eine angepaßte Motordrehzahl realisiert. Die konstruktive Lösung - speziell mit verzahnter Motorwelle - besteht in der großen Vielfalt der Motordrehzahlen, so daß mit identischen Getrieben verschiedene Abgangsdrehzahlen realisiert werden können.

## Patentansprüche

1. Mehrstufiges Stimradgetriebe für Elektroklein- und -kleinstmotoren, mit einem Getriebegehäuse, das eine Eingangswellen Öffnung aufweist, durch die zum Betrieb des Stimradgetriebes mit dem Elektroklein- oder -kleinstmotor eine Motorwelle (6) in das Gehäuseinnere einführbar ist, mit zumindest zwei im Getriebegehäuse gehaltenen Getriebewellen (9, 11), die mit Abstand parallel zur Mittenachse (19) des Getriebegehäuses verlaufen, und mit Stimrädem unterschiedlichen Durchmessers, die auf den Getriebewellen (9, 11) angeordnet sind, wobei zumindest eine der Getriebewellen als Getriebeachse drehfest im Getriebegehäuse gehalten ist, und wobei zumindest zwei Stimräder drehstarr miteinander verbunden und zu zumindest einem Doppelradsatz (28) zusammengefaßt sind, die auf einer Getriebewelle oder - achse drehbar gelagert ist, **dadurch gekennzeichnet, daß** die Getriebewelle oder - achse (9, 11) aus einem gesinterten Keramikwerkstoff gefertigt ist, und dass die Eingangswellenüffnung im wesentlichen koaxial zur Mittenachse (M) des Getriebegehäuses (2, 3) angeordnet ist.

2. Mehrstufiges Stimradgetriebe nach Anspruch 1, **dadurch gekennzeichnet, daß** die Getriebewellen oder -achsen (9, 11) aus Zirkoniumoxid gefertigt sind.

3. Mehrstufiges Stimradgetriebe nach einem der oben genannten Ansprüche, **dadurch gekennzeichnet, daß** die Getriebewellen oder - achsen (9, 11) parallel zueinander ausgerichtet sind.

4. Mehrstufiges Stimradgetriebe nach einem der oben genannten Ansprüche, **dadurch gekennzeichnet, daß** zumindest zwei Doppelradsätze (8, 10, 13, 14, 15, 25, 28) identisch zueinander ausgebildet sind.

5. Mehrstufiges Stimradgetriebe nach einem der oben genannten Ansprüche, **dadurch gekennzeichnet, daß** zumindest ein Doppelradsatz (8, 10, 13, 14, 15, 25) einstückig einen Zahnradabschnitt (8a, 10a, 13a, 14a, 15a, 25a) und einen Ritzelabschnitt (8b, 10b, 13b, 14b, 15b, 25b) ausbildet, wobei der Ritzelabschnitt (8b, 10b, 13b, 14b, 15b, 25b) einen kleineren Durchmesser aufweist als der Zahnradabschnitt (8a, 10a, 13a, 14a, 15a, 25a).

6. Mehrstufiges Stimradgetriebe nach einem der oben genannten Ansprüche, **dadurch gekennzeichnet, daß** zumindest ein Doppelradsatz (8, 10, 13, 14, 15, 25, 28) aus einem Sinterwerkstoff mittels eines Sinterverfahrens hergestellt ist.

7. Mehrstufiges Stimradgetriebe nach einem der oben genannten Ansprüche 1 bis 5, **dadurch gekennzeichnet, daß** zumindest ein Doppelradsatz (8, 10, 13, 14, 15, 25, 28) mittels eines Spritzgußverfahrens hergestellt ist.

8. Mehrstufiges Stimradgetriebe nach einem der oben genannten Ansprüche 1 bis 5, **dadurch gekennzeichnet, daß** zumindest ein Doppelradsatz (8, 10, 13, 14, 15, 25, 28) aus einem gehärteten Werkstoff, vorzugsweise einem Metallwerkstoff, hergestellt ist.

9. Mehrstufiges Stirnradgetriebe nach einem der oben genannten Ansprüche, **dadurch gekennzeichnet, daß** das Getriebegehäuse (2, 3, 4) im wesentlichen zylinderförmig ausgebildet ist.

10. Mehrstufiges Stirnradgetriebe nach einem der oben genannten Ansprüche, **dadurch gekennzeichnet, daß** das Getriebegehäuse (2, 3, 4) im Betrieb koaxial zu der Motorwelle (6) des Elektroklein- oder -kleinstmotors angeordnet ist.

11. Mehrstufiges Stimradgetriebe nach einem der oben genannten Ansprüche, **dadurch gekennzeichnet, daß** des weiteren eine mit der Motorwelle (6) in Eingriff stehende Eingangsstufe vorgesehen ist, die als ein auf einer Getriebewelle oder -achse (9) sitzendes Hohlrad (20a) ausgebildet ist.

12. Mehrstufiges Stimradgetriebe nach einem der oben genannten Ansprüche, **dadurch gekennzeichnet, daß** des weiteren eine Ausgangswelle (16) vorgesehen ist, die durch eine am Getriebegehäuse (2, 3, 4) angebrachte Ausgangswellenöffnung nach außen geführt und relativ zum Getriebegehäuse (2, 3,4) drehbar ist.

13. Mehrstufiges Stirnradgetriebe nach Anspruch 12, **dadurch gekennzeichnet, daß** die Ausgangswelle (16) zumindest abschnittsweise als Hohlwelle (16a) ausgebildet ist, in der eine Getriebewelle oder -achse (9) zumindest abschnittsweise und vorzugsweise relativ zur Ausgangswelle (16) drehbar aufgenommen ist.

14. Mehrstufiges Stirnradgetriebe nach den Ansprüchen 11 und 12, **dadurch gekennzeichnet, daß** die Eingangsstufe an der Getriebewelle oder-achse (9) angeordnet ist, an der auch die Ausgangswelle (16) angeordnet ist.

15. Mehrstufiges Stimradgetriebe nach einem der Ansprüche 12 bis 14, **dadurch gekennzeichnet, daß** zwischen Getriebegehäuse und Ausgangswelle eine Lagerbuchse (17) angeordnet ist, in der die Ausgangswelle (16) im Getriebegehäuse (2, 3, 4) drehbar gelagert ist.

16. Bausatz, bestehend aus einem Elektroklein- oder -kleinstmotor und einem mehrstufigen Stimradgetriebe, **dadurch gekennzeichnet, daß** das Stimradgetriebe (1) gemäß einem der oben genannten Ansprüche aufgebaut ist.

17. Bausatz nach Anspruch 16, **dadurch gekenzeichnet, daß** die Motorwelle (6) des Elektromotors verzahnt ist.

## Claims

1. A multistage spur-type gearing for small-sized and miniature electric motors, comprising a gearing housing including an input shaft opening through which a motor shaft (6) can be inserted into the interior of the housing for operating the spur-type gearing with the small or miniature electric motor, at least two gear shafts (9, 11) that are held in the gearing housing and extend at a distance from and in parallel with the center axis (19) of the gearing housing, and spur gears of different diameters which are arranged on the gear shafts (9, 11), at least one of said gear shafts being fixidly held as a gear axle in the gearing housing, and at least two spur gears being fixedly connected to one another and combined to form at least one dual gear set (28) which is rotatably supported on a gear shaft or axle, **characterized in that** the gear shaft or axle (9, 11) is made from a sintered ceramic material, and that the input shaft opening is arranged to be substantially coaxial to the center axis (M) of the gearing housing (2, 3).

2. The multistage spur-type gearing according to claim 1, **characterized in that** the gear shafts or axles (9, 11) are made from zirconium oxide.

3. The multistage spur-type gearing according to any one of the above-mentioned claims, **characterized in that** the gear shafts or axles (9, 11 ) are oriented in parallel with one another.

4. The multistage spur-type gearing according to any one of the above-mentioned claims, **characterized in that** at least two dual gear sets (8, 10, 13, 14, 25, 28) are made identical with one another.

5. The multistage spur-type gearing according to any one of the above-mentioned claims, **characterized in that** at least one dual gear set (8, 10, 13, 14, 25) integrally forms a toothed gear section (8a, 10a, 13a, 14a, 25a) and a pinion section (8b, 10b, 13b, 14b, 15b, 25b), the pinion section (8b, 10b, 13b, 14b, 25b) having a smaller diameter than the toothed gear section (8a, 10a, 13a, 14a, 25a).

6. The multistage spur-type gearing according to any one of the above-mentioned claims, **characterized in that** at least one dual gear set (8, 10, 13, 14, 25, 28) is made from a sintered material by means of a sintering process.

7. The multistage spur-type gearing according to any one of the above-mentioned claims 1 to 5, **characterized in that** at least one dual gear set (8, 10, 13, 14, 25, 28) is produced by means of an injection molding process.

8. The multistage spur-type gearing according to any one of the above-mentioned claims 1 to 5, **characterized in that** at least one dual gear set (8, 10, 13, 14, 25, 28) is made from a hardened material, preferably a metal material.

9. The multistage spur-type gearing according to any one of the above-mentioned claims, **characterized in that** the gearing housing (2, 3, 4) is made substantially cylindrical.

10. The multistage spur-type gearing according to any one of the above-mentioned claims, **characterized in that** during operation the gearing housing (2, 3,4) is arranged to be coaxial to the motor shaft (6) of the small or miniature electric motor.

11. The multistage spur-type gearing according to any one of the above-mentioned claims, **characterized in that** there is further provided an input stage which is in engagement with the motor shaft (6) and is designed as a ring gear (20a) which is seated on a gear shaft or axle (9).

12. The multistage spur-type gearing according to any one of the above-mentioned claims, **characterized in that** there is further provided an output shaft (16) which is guided to the outside through an output shaft opening provided on the gearing housing (2, 3, 4) and is rotatable relative to the gearing housing (2, 3, 4).

13. The multistage spur-type gearing according to claim 12, **characterized in that** the output shaft (16) is designed at least in sections as a ring gear (16a) in which a gear shaft or axle (9, 11) is rotatably received at least sectionwise and preferably relative to the output shaft (16).

14. The multistage spur-type gearing according claims 11 and 12, **characterized in that** the input stage is arranged on the gear shaft or axle (9) on which the output shaft (16) is also arranged.

15. The multistage spur-type gearing according to claims 12 to 14, **characterized in that** a bearing bush (17) in which the output shaft (16) is rotatably supported in the gearing housing (2, 3, 4) is arranged between gearing housing and output shaft.

16. A kit consisting of a small or miniature electric motor and a multistage spur-type gearing, **characterized in that** the spur-type gearing (1) is composed according to any one of the above-mentioned claims.

17. The kit according to claim 16, **characterized in that** the motor shaft (6) of the electric motor is toothed.

## Revendications

1. Réducteur à roues cylindriques à plusieurs étages pour des moteurs électriques petits et très petits, comprenant un carter de réducteur qui présente une ouverture d'arbre d'entrée, par laquelle un arbre de moteur (6) peut être introduit à l'intérieur du carter pour le fonctionnement du réducteur à roues cylindriques avec le moteur électrique petit ou très petit, au moins deux arbres de réducteur (9, 11) supportés dans le carter du réducteur et s'étendant à distance parallèlement à l'axe médian (19) du carter de réducteur, et des roues cylindriques de différents diamètres, qui sont disposées sur les arbres de réducteurs (9, 11), au moins un des arbres de réducteur étant supporté de manière résistant à la torsion dans le carter de réducteur, et au moins deux roues cylindriques étant reliées ensemble de manière rigide à la torsion et étant réunies pour former au moins un jeu de doubles roues (28), qui est monté sur un arbre ou axe de réducteur de manière à pouvoir tourner, **caractérisé en ce que** l'arbre ou axe de réducteur (9, 11) est réalisé dans une matière céramique frittée et l'ouverture d'arbre d'entrée est disposée essentiellement de manière coaxiale à l'axe médian (M) du carter du réducteur (2, 3).

2. , Réducteur à roues cylindriques à plusieurs étages selon la revendication 1, **caractérisé en ce que** les arbres ou axes de réducteurs (9, 11) sont réalisés en oxyde de zirconium.

3. Réducteur à roues cylindriques à plusieurs étages selon l'une des revendications précédentes, **caractérisé en ce que** les arbres ou axes de réducteur (9, 11) sont orientés parallèlement l'un à l'autre.

4. Réducteur à roues cylindriques à plusieurs étages selon l'une des revendications précédentes, **caractérisé en ce qu'**au moins deux jeux de doubles roues (8, 10, 13, 14, 15, 25, 28) sont formés de manière identique l'un à l'autre.

5. Réducteur à roues cylindriques à plusieurs étages selon l'une des revendications précédentes, **caractérisé en ce qu'**au moins un jeu de doubles roues (8, 10, 13, 14, 15, 25) forme d'un seul tenant un segment de roue dentée (8a, 10a, 13a, 14a, 15a, 25a) et un segment de pignon (8b, 10b, 13b, 14b, 15b, 25b), le segment de pignon (8b, 10b, 13b, 14b, 15b, 25b) présentant un diamètre plus petit que le segment de roue dentée (8a, 10a, 13a, 14a, 15a, 25a).

6. Réducteur à roues cylindriques à plusieurs étages selon l'une des revendications précédentes, **caractérisé en ce qu'**au moins un jeu de doubles roues (8, 10, 13, 14, 15, 25, 28) est fabriqué dans une matière frittée au moyen d'un procédé de frittage.

7. Réducteur à roues cylindriques à plusieurs étages selon l'une des revendications 1 à 5, **caractérisé en ce qu'**au moins un jeu de doubles roues (8, 10, 13, 14, 15, 25, 28) est fabriqué au moyen d'un procédé de moulage par injection.

8. Réducteur à roues cylindriques à plusieurs étages selon l'une des revendications 1 à 5, **caractérisé en ce qu'**au moins un jeu de doubles roues (8, 10, 13, 14, 15, 25, 28) est fabriqué dans une matière trempée, de préférence une matière métallique.

9. Réducteur à roues cylindriques à plusieurs étages selon l'une des revendications précédentes, **caractérisé en ce que** le carter de réducteur (2, 3, 4) est de forme essentiellement cylindrique.

10. Réducteur à roues cylindriques à plusieurs étages selon l'une des revendications précédentes, **caractérisé en ce que** le carter de réducteur (2, 3, 4) est disposé de manière coaxiale à l'arbre (6) du moteur électrique petit ou très petit.

11. Réducteur à roues cylindriques à plusieurs étages selon l'une des revendications précédentes, **caractérisé en ce qu'**il est prévu en outre un étage d'entrée en prise avec l'arbre de moteur (6), qui est formé comme une roue à denture intérieure (20a) logée sur un arbre ou axe de réducteur (9).

12. Réducteur à roues cylindriques à plusieurs étages selon l'une des revendications précédentes, **caractérisé en ce qu'**il est prévu en outre un arbre de sortie (16) qui est guidé vers l'extérieur à travers une ouverture d'arbre de sortie ménagée sur le carter de réducteur (2, 3, 4) et peut tourner relativement au carter de réducteur (2, 3, 4).

13. Réducteur à roues cylindriques à plusieurs étages selon la revendication 12, **caractérisé en ce que** l'arbre de sortie (16) est formé au moins par segments comme un arbre creux (16a), dans lequel un arbre ou axe de réducteur (9) est logé au moins par segments et de préférence de manière à pouvoir tourner relativement à l'arbre de sortie (16).

14. Réducteur à roues cylindriques à plusieurs étages selon les revendications 11 et 12, **caractérisé en ce que** l'étage d'entrée est disposé sur l'arbre ou axe de réducteur (9) sur lequel l'arbre de sortie (16) est aussi disposé.

15. Réducteur à roues cylindriques à plusieurs étages selon l'une des revendications 12 à 14, **caractérisé en ce qu'**un coussinet (17), dans lequel l'arbre de sortie (16) est monté de manière à pouvoir tourner dans le carter de réducteur (2. 3, 4), est disposé entre carter de réducteur et arbre de sortie.

16. Jeu de pièces, comprenant un moteur électrique petit ou très petit et un réducteur à roues cylindriques à plusieurs étages, **caractérisé en ce que** le réducteur à roues cylindriques (1) est conçu selon l'une des revendications précédentes.

17. Jeu de pièces selon la revendication 16, **caractérisé en ce que** l'arbre (6) du moteur électrique est denté.
